# Europäisches Patentamt

# European Patent Office

# Office européen des brevets

(19)

(11) Numéro de publication : **0 202 256 B2**

(12)

# NOUVEAU FASCICULE DE BREVET EUROPEEN

(45) Date de publication du nouveau fascicule du brevet : **29.07.92 Bulletin 92/31**

(51) Int. Cl.⁵ : **E02D 29/10**, F16L 9/22, E04B 1/04, E04B 1/32, E21D 11/04

(21) Numéro de dépôt : **85905414.0**

(22) Date de dépôt : **04.11.85**

(86) Numéro de dépôt international : **PCT/FR85/00310**

(87) Numéro de publication internationale : **WO 86/02967 22.05.86 Gazette 86/11**

(54) **PROCéDé DE CONSTRUCTION D'UNE STRUCTURE COUVERTE.**

(30) Priorité : **05.11.84 FR 8416810**

(43) Date de publication de la demande : **26.11.86 Bulletin 86/48**

(45) Mention de la délivrance du brevet : **08.02.89 Bulletin 89/06**

(45) Mention de la décision concernant l'opposition : **29.07.92 Bulletin 92/31**

(84) Etats contractants désignés : **AT BE CH DE FR GB IT LI LU NL SE**

(56) Documents cités : **BE-A- 547 476** **DE-A- 2 623 179**

(56) Documents cités : **DE-C- 660 012** **FR-A- 2 223 513** **FR-A- 2 358 518** **US-A- 4 314 775** **supplément à la revue Travaux, janvier 1984 - prix de l'innovation 1983, p. 27 à 30**

(73) Titulaire : **Matiere, Marcel** **17, avenue Aristide Briand** **F-15000 Aurillac (FR)**

(72) Inventeur : **Matiere, Marcel** **17, avenue Aristide Briand** **F-15000 Aurillac (FR)**

(74) Mandataire : **Phélip, Bruno et al** **c/o Cabinet Harlé & Phélip 21, rue de La Rochefoucauld** **F-75009 Paris (FR)**

EP 0 202 256 B2

Jouve, 18, rue Saint-Denis, 75001 PARIS

## Description

La présente invention concerne un procédé de construction d'une structure couverte de grande section recouverte d'un remblai.

On a déjà décrit, dans la demande de brevet européen EP-A-0 081 402 au nom de la demanderesse, un procédé de construction d'une structure couverte en forme de conduit de grande section constitué par assemblage d'éléments longitudinaux, préfabriqués, dont chacun ne forme qu'une partie, de la section transversale, ces éléments étant reliés entre eux par des liaisons longitudinales, éventuellement articulées. Ce procédé, tel qu'il a été décrit, s'applique à des conduits, ou des passages souterrains dont la section transversale qui est, de préférence, aplatie à la base avec un rapport largeur/hauteur de 1,5 environ, peut aller jusqu'à 35 m³ et même plus. On conçoit qu'il est difficile de prévoir de tels conduits avec, par exemple, une largeur de l'ordre de 2 ou 3 fois supérieure à la hauteur, car il faudrait alors renforcer de façon prohibitive les éléments de la structure.

Il arrive cependant que l'on soit amené à prévoir des passages de grande largeur, par exemple pour des passages routiers à plusieurs voies, alors qu'une grande hauteur n'est pas nécessaire et est même déconseillée en raison d'un volume inutile de terrain à déblayer, ou est même inacceptable, par exemple à cause de la nécessité d'inscrire l'ouvrage dans une hauteur limite imposée.

D'autre part, dans certains cas, il peut être intéressant d'augmenter la surface au sol du volume construit et par conséquent, à section égale, d'augmenter sa largeur en diminuant sa hauteur par rapport à un conduit de section classique.

On connaît également, par le document DE-C-660 012, un procédé de construction d'une gare souterraine comportant deux sections voûtées identiques, accolées, séparées par un piedroit central et comportant un radier reposant sur le sol. Ce piedroit est constitué de piliers espacés et comporte à sa partie inférieure une semelle et à sa partie supérieure une longrine en V sur laquelle prennent appui les deux éléments de voûte. Cependant, la construction est réalisée en galerie par section sucessives à l'abri d'une protection s'appuyant sur un échauffaudage.

La présente invention a pour objet d'apporter des perfectionnements et des extensions à la technique de réalisation de conduits de grande section décrite dans la demande de brevet européen déjà citée.

Dans ce brevet européen, un tel conduit de grande section est constitué par assemblage d'éléments préfabriqués, respectivement, des éléments plans formant radier, des éléments latéraux placés de part et d'autre du radier et des éléments de voûte à profil curviligne, reposant, par l'intermédiaire d'appuis articules, sur les extrémités supérieures des éléments latéraux, ces derniers comprenant une paroi incurvée dont le protil interne se raccorde vers le haut à celui de l'élément de voûte et vers le bas, au radier horizontal. En outre, les éléments latéraux reposent sur le sol par l'intermédiaire de stabilisateurs extérieurs qui leur donnent une assise suffisante pour se tenir debout, sans appui auxiliaire, échafaudages ou autres.

Le procédé de construction connu est décrit dans le préambule de la revendication 1.

La présente invention couvre le procédé de construction d'une structure couverte constituée d'au moins deux sections accolées d'axes parallèles, limitées chacune vers le bas par un élément de radier, vers le haut par un élément de voûte, et sur les côtés, à l'extérieur par un élément latéral et à l'intérieur par au moins un piédroit intermédiaire prenant appui sur le sol par l'intermédiaire d'une semelle interposée entre les éléments de radier qui l'encadrent; ledit piédroit supporte une longrine intermédiaire comprenant deux parois latérales s'écartant en V de tacon à ménager deux surfaces d'appui en forme de rainures concaves sur lesquelles reposent les côtés longitudinaux adjacents des deux éléments de voûte correspondants.

Dans un premier mode de réalisation, chaque piédroit intermédiaire est constitué par un mur vertical, éventuellement percé d'ouvertures, muni à sa base d'une semelle d'appui continue et dont la partie supérieure forme la longrine intermédiaire d'appui des éléments de voûte.

Dans un autre mode de réalisation, chaque piédroit intermédiaire est constitue d'une série de piliers munis à leur base de semelles d'appui individuelles qui sont posées entre les bords longitudinaux adjacents des éléments de radier, les intervalles entre les radiers et entre les semelles étant bétonnés après la pose pour la solidarisation de l'ensemble. De façon avantageuse, la longrine intermédiaire peut être prolongée, au-dessus des appuis, par une poutre en allège de hauteur suffisante pour lui permettre de résister aux efforts de flexion encaissés en service, compte tenu de l'espacement des piliers.

Le procédé de réalisation d'une telle structure comprend les étapes décrites dans la partie caractérisante de la revendication 1.

Le sol ayant été préalablement préparé pour réaliser, au niveau voulu, une surface d'assise résistante, on place tout d'abord sur le sol, en nombre correspondant à celui des sections à construire, des éléments de radier, éventuellement coulés en place, et alignés suivant les axes desdites sections. On place ensuite les piédroits entre les éléments de radier et les éléments latéraux incurvés le long des côtés extérieurs, en laissant un espace entre les bords longitudinaux en vis-à-vis. De même que les éléments latéraux, les piédroits doivent avoir une assise suffisante se tenir droit par eux-mêmes. Si les piédroits sont constitués de piliers espacés, on pose alors sur leur partie supérieure, des poutres longitudinales formant les longrines intermédiaires, en assurant leur solidarisation avec les piliers. Si les piédroits sont constitués de murs verticaux, leur partie supérieure forme elle-même la longrine.

On peut alors poser les éléments de voûte l'un après l'autre, en les faisant reposer par leurs bords longitudinaux, à l'extérieur sur les éléments latéraux et à l'intérieur, sur les surfaces d'appui ménagées le long des longrines intermédiaires.

On coule enfin du béton pour combler les espaces laissés entre les éléments de radier, les éléments latéraux et les semelles des piédroits, de façon à solidariser l'ensemble.

La structure est ainsi réalisé à l'avancement, par tronçons successifs.

Suivant des modalités avantageuses,

– on peut solidariser les différents éléments de la structure par précontrainte,

– au moins certaines des liaisons entre éléments longitudinaux se trouvent placées dans des noeuds de contrainte, c'est-à-dire des zones où la valeur absolue des contraintes passe par un minimum,

– au moins certaines liaisons longitudinales entre deux éléments adjacents constituent chacune une articulation permettant un déplacement angulaire limité,

– lesdites liaisons à articulation sont situées en des zones où la valeur absolue des contraintes passe par un minimum.

L'invention va maintenant être décrite plus en détail à l'aide d'exemples pratiques, donnés à titre non limitatif et illustrés aux dessins, sur lesquels:

Fig. 1 représente une coupe transversale d'une structure réalisée suivant l'invention,

Fig. 2 est une vue de détail des appuis sur la longrine intermédiaire,

Fig. 3 est un schéma en perspective montrant la construction d'une structure à sections multiples.

La structure représentée sur les dessins est destinée, par exemple au passage d'une double voie de circulation pour véhicule. Elle est formée d'éléments préfabriques en béton armé. Comme dans le brevet européen EP-A0 081 402 déjà cité, ces éléments comprennent, en section transversale, des éléments de radier 1, des éléments latéraux 2 et des éléments de voûte 4.

Pour la construction d'une structure de ce type formant un conduit à section unique, on place tout d'abord, sur le sol 10 préalablement préparé au niveau voulu, les éléments de radier, ceux-ci pouvant éventuellement être coulés sur place. On peut également placer à l'avance des éléments de radier sur une certaine longueur et alignés suivant l'axe du conduit à construire. Selon une caractéristique particulièrement avantageuse de l'invention, les mêmes éléments préfabriqués peuvent servir à la construction de structures à plusieurs sections accolées, selon un système modulaire.

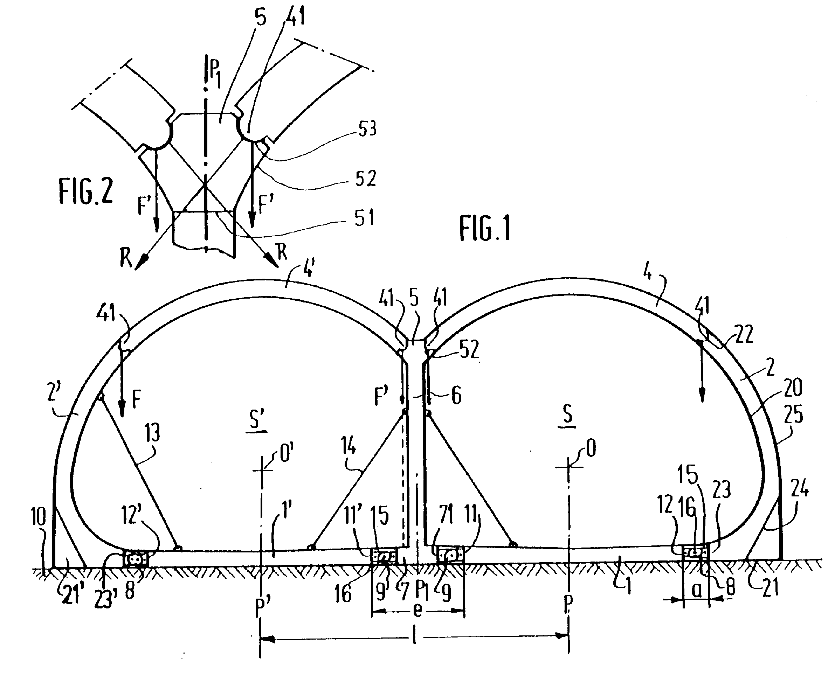

La Fig. 1 représente, à titre d'exemple, une structure à deux sections accolées dont les axes 0,0′ sont écartés d'une distance 1 choisie de telle sorte qu'il subsiste, entre les éléments de voûte 4, 4′, un espace suffisant pour y placer une longrine d'appui intermédiaire 5.

Pour la construction d'une telle structure, on placera donc deux séries parallèles 1 et 1′ d'éléments de radier, en laissant entre leurs bords longitudinaux adjacents 11 et 11′, une distance (e) fonction de l'entr'axe (1).

Entre les bords longitudinaux adjacents 11 et 11′ des éléments de radier 1 et 1′, est placé un élément d'appui vertical 6 formant piédroit, muni à sa base d'une semelle d'appui 7 et surmonté d'une longrine 5. Cette dernière est limitée par deux parois latérales 52 s'écartant en V, de façon à ménager à sa partie supérieure, deux surfaces d'appui 53, de forme identique aux bords longitudinaux supérieurs 22 des éléments latéraux 2. Ces surfaces d'appui 53 auront donc, de préférence, la forme de rainures circulaires concaves sur lesquelles viennent reposer les bords longitudinaux arrondis 41 des éléments de voûte 4, de façon à réaliser un appui articulé autour d'une direction longitudinale.

La largeur de la semelle d'appui 7 est déterminée en fonction de la distance (e) entre les bords longitudinaux internes 11, 11′ des éléments de radier 1, 1′ de telle sorte qu'il subsiste entre ces derniers et les bords 71 de la semelle, un espace 9 qui donne une certaine possibilité de réglage de la position du piédroit 6.

De part et d'autre des bords extérieurs 12 et 12′ des éléments de radier, sont alors placés les éléments latéraux incurvés 2 et 2′. Selon une disposition déjà décrite dans le brevet européen précédent, ces derniers sont constitués par une paroi incurvée dont le profil interne 20 a une courbure variable lui permettant de se raccorder, vers le bas, à la partie supérieure horizontale du radier 1 et vers le haut, au profil circulaire de l'élément de voûte.

La position des bords longitudinaux internes 23 des éléments latéraux 2 est déterminée de façon que, compte tenu de leur surface d'assise et de la répartition des charges, lesdits éléments se tiennent debout par eux-mêmes, sans échaufaudage, même lorsqu'ils supportent, à leurs extrémités supérieures 22, le poids propre des éléments de voûte 4, tout en laissant, entre les bords longitudinaux internes 23, 23′ et externes 12, 12′, respectivement, des éléments latéraux 2, 2′ et des éléments de radier 1, 1′, un espace 8 de largeur (a) suffisante pour permettre un réglage précis de la position de l'élément latéral 2, 2′ à la pose.

Après la pose des éléments, les espaces de réglage 8 et 9 sont bétonnés pour assurer le clavage du radier, des fers de liaison 15 en forme de boucles étant à cet effet laissés en attente sur les côtés des éléments. Des armatures longitudinales 16 sont enfilées dans les fers en attente 15 de façon à assurer la continuité du clavage et homogénéiser les déformations entre les tronçons successits de la structure.

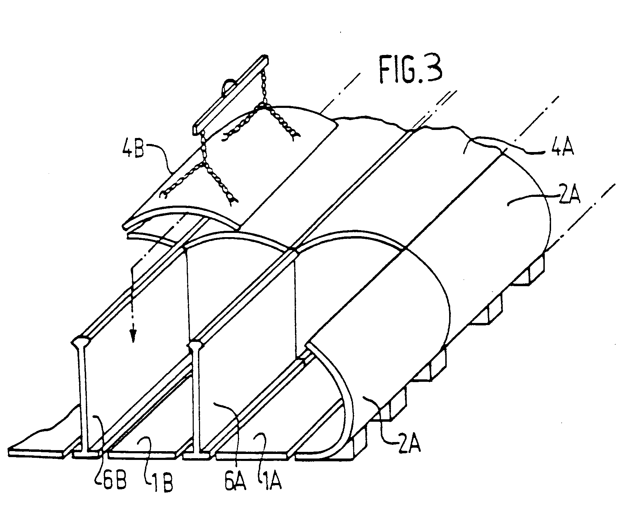

Selon une disposition décrite dans le brevet précédent, les éléments latéraux 2, 2′ sont munis, à leur base, du côté externe, de stabilisateurs 21 de section triangulaire qui peuvent s'étendre sur toute la longueur de l'élément latéral ou bien, comme on le voit sur la Fig 3, être constitués d'éléments prismatiques régulièrement espacés.

La partie inférieure 24 de la face externe 25 de la paroi incurvée est avantageusement plane et inclinée, par exemple de 3:1 par rapport à la base, de façon à faciliter le compactage du remblai sur les côtés extérieurs.

Les éléments sont dessinés de telle sorte que, lorsqu'ils sont en charge sous remblai, les efforts encaissés se transmettent, selon des directions sensiblement tangentielles, de l'élément de voûte 4 à l'élément latéral 2, les réactions d'appui passant alors sensiblement au centre de l'articulation. En revanche, lorsque l'élément de voûte 4 est posé et soumis uniquement à son propre poids, il exerce, sur les extrémités des éléments latéraux 2, des efforts verticaux F qui sont appliqués sur des parties à plan tangent horizontal des rainures 22.

Les rainures d'appui 53 ménagées de part et d'autre des poutres longitudinales 5, sont réalisées de facon tout à tait identique aux rainures d'appui 22 des éléments latéraux 2, et la largeur de la longrine 5 est prévue de telle sorte que les efforts d'appui F′ soient peu éloignés du plan médian P1 du piédroit 6. La largeur de la semelle 7 peut être déterminée pour permettre au piédroit 6 de se tenir droit par lui-même, sans échaufaudage, tout en laissant sur ses côtés un espace de réglage 8.

On remarquera en effet, que, compte tenu du dimensionnement requis pour encaisser les charges dues au remblai, les éléments de voûte 4 sont relativement rigides et ne risquent pas de se déformer sous leur poids propre; de la sorte, lors de la pose, les efforts appliquées sur les appuis 5 n'ont pratiquement pas de composante horizontale. Ainsi, après avoir posé un piédroit 6 entre les radiers 1 et 1′ et des éléments latéraux 2 et 2′ de part et d'autre de ces derniers, on pourra mettre en place successivement un élément de voûte 4 puis l'autre 4′, le piédroit 6 ne risquant pas de se renverser lorsqu'il n'est chargé que d'un seul côté, d'autant plus que les frottements entre les bords de l'élément de voûte et les rainures d'appui interviennent également dans la stabilité des piédroits intermédiaires. Bien entendu, lorsque les deux éléments de voûte 4 et 4′ sont en place, l'ensemble est parfaitement stable, la longrine 5 étant chargée également des deux côtés. On peut alors réaliser le clavage de solidarisation de tout le radier en bétonnant les espaces 8 et 9 laissés entre les bords longitudinaux du radier et, respectivement, les éléments latéraux 2 et la semelle 7 du piédroit 6.

Bien entendu, si les éléments latéraux et les piédroits 6 sont déterminés de façon à se tenir en position verticale par eux-mêmes, il est préférable, pendant la pose, que ces éléments soient soutenus par des étais amovibles 13 et 14, disposés entre le radier et, respectivement, les éléments latéraux 2, 2′ et le piédroit 6. En effet, on peut toujours craindre une fausse manoeuvre, par exemple un balancement de l'élément de voûte au moment de sa mise en place, qui soumettrait accidentellement les éléments d'appui à des efforts horizontaux susceptibles de les renverser. Cependant, ce système d'étayage peut être léger et retiré dès que les éléments de voûte 4 et 4′ ont été mis en place de part de d'autre du piédroit central.

Sur la Fig. 1, on a représenté une structure à deux sections accolées mais le même système de construction modulaire pourrait être étendu à une structure à sections multiples comme on l'a représenté sur la Fig. 3, par exemple pour réaliser un conduit de très grande section ou un passage routier à plusieurs voies.

Dans l'exemple représenté sur la Fig. 3, le piédroit central est un mur vertical plein, éventuellement percé de portes.

Bien entendu, lors du clavage du radier, on bétonnera non seulement les joints 9 entre les semelles 70 des piliers 60 mais également les espaces 72 laissés entre les piliers. D'une façon générale, d'ailleurs, la surface d'assise et le ferraillage des semelles 70 et de leur jonction avec le radier seront déterminés en fonction des efforts supportés par les piliers 60 et de la résistance du sol.

Normalement, tous les éléments préfabriqués constituant la structure sont en béton.

## Revendications

1. Procédé de construction sur un sol préalablement préparé au niveau voulu d'une structure couverte recouverte d'un remblai, par assemblage d'éléments préfabriqués en beton armé ou analogue, couvrant chacun une partie du périmètre de la structure et comprenant respectivement des éléments plans (1) formant un radier posé sur le sol, éventuellement coulé en place, des éléments de voûte (4) à profil curviligne et des éléments latéraux (2) comprenant une paroi incurvée dont le profil est prévu pour se raccorder vers le haut à celui d'un élément de voûte (4) et vers le bas à la face supérieure d'un élément de radier (1), chaque élément latéral incurvé (2) reposant sur le sol par l'intermédiaire de stabilisateurs extérieurs (21) donnant à chaque élément latéral une assise suffisante pour se tenir debout, sans appui auxiliaire, les éléments latéraux incurvés (2) étant placés de part et d'autre du radier en laissant entre les bords longitudinaux internes (23, 23′) et externes (12, 12′) respectivement des éléments latéraux incurvés (2, 2′) et des éléments de radier (1, 1′), un espace (8) dans lequel s'étendent des fers de liaison (15) laissés en attente et les éléments de voûte (4) étant placés sur les éléments latéraux incurvés (2) en reposant sur les extrémités supérieures de ces derniers par l'intermédiaire d'appuis articulés (41), les éléments de radier (1) étant solidarisés avec la base des éléments latéraux incurvés (2) par clavage après la pose, l'ensemble de la structure étant alors enterré sous un remblai caractérisés par le fait que l'on réalise une structure de grande section transversale par rapport à sa hauteur comportant au moins deux sections accolées, d'axes parallèles , la construction étant réalisée en suivant les étapes suivantes :

– on réalise des éléments préfabriqués (6) formant piédroit intermédiaire, comprenant chacun un mur vertical, éventuellement percé d'ouvertures, muni à sa base d'une semelle d'appui continu (7) dont la largeur est déterminée pour permettre au piédroit (6) de se tenir droit par lui-même et dont la partie supérieure est munie d'une longrine (5) comportant deux parois latérales (52) s'écartant en V de façon à ménager; de part et d'autre d'un plan médian (P1), deux surfaces d'appui (53) en forme de rainures concaves,

– on place sur le sol, en nombre correspondant à celui des sections à construire, des éléments de radier (1, 1′), éventuellement coulés sur place, et alignés suivant les axes (o, o′) des sections à construire,

– on place respectivement les éléments latéraux incurvés (2, 2′) le long des bords longitudinaux extérieurs (12, 12′) et les piédroits intermédiaires (6) entre les bords longitudinaux adjacents (11, 11′) des éléments de radier (1, 1′), la largeur des semelles d'appui (7) étant déterminée en fonction de la distance (e) entre les bords longitudinaux internes (11, 11′) des éléments de radier (1, 1′) de telle sorte qu'il subsiste entre ces derniers et les bords (71) de la semelle, un espace (9) de réglage de la position du piédroit (6),

– on pose les éléments de voûte l'un après l'autre en les faisant reposer par leurs bords longitudinaux (41), à l'extérieur, sur les éléments latéraux (2, 2′) et à l'intérieur sur les surfaces d'appui (53) des longrines (5),

– on coule du béton pour combler les intervalles entre les éléments de radier (1, 1′), les bases des éléments latéraux (2, 2′) et les semelles (7) des piédroits (6) de façon à les solidariser.

**Patentansprüche**

1. Verfahren zum Aufbau auf einem auf das gewünschte Niveau vorbereiteten Boden einer durch Anschüttung überdeckten Konstruktion durch Zusammenbau von vorgefertigten Teile aus Stahlbeton oder dergleichen, die jeweils ein Teil des Konstruktionumfangs einnehmen und bestehend aus auf dem Boden angeordneten, evtL. vor Ort gegossenen ein Plattenfundament bildenden Planteilen (1) sowie Gewölbeteile (4) mit gekrümmten Profil und Seitenteile (2), bestehend aus einer gekrümmten Wand, deren Profil nach oben an dasjenige eines Gewölbeteils (4) und nach unten an die Oberfläche eines Fundamentteils (1) anschliesst, wobei jedes gekrümmte Seitenteil (2) auf dem Boden über äussere Stabilisatoren (21) aufliegt, so dass jedes Seitenelement eine ausreichende Auflage hat, um ohne Hilfsstützen aufrecht stehen kann, wobei die gekrümmten Seitenelemente (2) beiderseits des Plattenfundamentes so angeordnet sind, dass zwischen den Innen- (23, 23′) bzw. den Aussenlängskanten (12, 12′) und der gekrümmten Seitenelemente (2, 2′) bzw. der Fundamentteile (1, 1′) einen Raum (8) gebildet wird, in den bereitstehende Verbindungseisen (15) hineinragen und wobei die Gewölbeteile (4) auf den gekrümmten Seitenteile (2) gelagert sind und auf den oberen Enden derselben über Gelenkstützen (41) aufliegen, wobei die Plattenfundamentteile (1) durch Abschliessen nach der Aufstellung mit der Basis der gekrümmten Seitenteile (2) fest miteinander verbunden werden, wobei der gesamte Aufbau durch eine Aufschüttung eingegraben wird, dadurch gekennzeichnet, dass ein Aufbau mit einem gegenüber der Höhe grossem Querschnitt realisiert wird, die mindestens zwei aneinanderliegende Abschnitte mit parallelen Achsen aufweist, wobei die Konstruktion in folgenden Schritten realisiert wird :

– es werden vorgefertigte eine Zwischenwand bildende Teile (6) hergestellt, die je aus einer senkrechten Wand mit evtl. durchgebrochenen Öffnungen besteht, die an ihrer Basis eine durchgehende Sohlenplatte (7) aufweist, deren Breite so bestimmt wird, dass die Zwischenwand (6) für sich allein aufrecht stehen kann und deren Oberteil einen Längsträger (5) aufweist mit zwei V -formig auseinandergehenden Seitenwänden (52) um beiderseits einer Mittelebene (P1) zwei als konkave Rinnen ausgebildete Stützflächen (53) zu bilden,

– es werden eine der Anzahl der zu bauenden Abschnitte entsprechende Anzahl Plattenfundamentelemente (1, 1′) auf dem Boden angeordnet, evtl. vor Ort gegossen und gemäss den Achsen (o, o′) der zu bauenden Abschnitte ausgerichtet,

– die gekrümmten Seitenteile (2, 2′) werden entlang der Aussenlängskanten (12, 12′) und die Zwischenwände (6) zwischen den benachbarten Längskanten (11, 11′) der Plattenfundamentelemente (1, 1') angeordnet, wobei die Breite der Sohlenplatten (7) entsprechend dem Abstand (e) zwischen den Innenlängskanten (11, 11') der Plattenfundamentelemente (1, 1') so bestimmt wird, dass zwischen den letzteren und den Kanten (71) der Sohlenplatte ein Raum (9) zur Lageverstellung der Zwischenwand (6) gebildet wird,

– die Gewölbeteile werden nacheinander so angeordnet, dass sie mit ihren Längskanten (41) aussen auf den Seitenteilen (2, 2') und innen auf den Stützflächen (53) der Längsträger (5) aufliegen

– zum Auffüllen der Zwischenräume wird zwischen den Plattenfundamentelementen (1, 1'), den Basen der Seitenteile (2, 2') und den Abstützplatten (7) der Zwischenwänden (6) Beton eingegossen um diese fest miteinander zu verbinden.

## Claims

1. Method of constructing, on previously prepared ground at the desired level, a covered structure overlaid with an embankment, by assembly of prefabricated elements made of reinforced concrete or the like, each covering a part of the perimeter of the structure and comprising, respectively, planar elements (1) forming a bed plate placed on the ground, if required cast in situ, arch elements (4) of curved profile and lateral elements (2) comprising an incurved wall, the profile of which is provided in order to be connected towards the top to that of an arch element (4) and towards the bottom to the upper face of a bed plate element (1), each incurved lateral element (2) resting on the ground via exterior stabilisers (21) providing each lateral element with a sufficient foundation to stand upright without auxiliary support, the incurved lateral elements (2) being placed on either side of the bed plate, leaving between the internal longitudinal edges (23, 23') and external longitudinal edges (12, 12'), respectively, of the incurved lateral elements (2, 2') and of the bed plate elements (1, 1') a space (8) in which there extend ready-positioned iron links (15), and the arch elements (4) being placed on the incurved lateral elements (2), resting on the upper ends of the latter via jointed supports (41), the bed plate elements (1) being made unitary with the base of the incurved lateral elements (2) by keying after placement, the entire structure then being buried under an embankment, characterised by the fact that a structure of large cross-section relative to its height comprising at least two adjoining sections having parallel axes is produced, the construction being effected by following the steps below:

– prefabricated elements (6) forming an intermediate pier are produced, each comprising a vertical wall, if required pierced with holes, provided at its base with a continuous supporting sole plate (7) whose width is determined so as to allow the pier (6) to stand upright by itself and whose upper part is provided with a longitudinal beam (5) comprising two lateral walls (52) diverging in a V so as to provide, on either side of a median plane (P1), two support surfaces (53) in the form of concave grooves,

– bed plate elements (1, 1'), if required cast in situ, and aligned along the axes (o, o') of the sections to be constructed, are placed on the ground in a number corresponding to the number of sections to be constructed,

– the incurved lateral elements (2, 2') are placed along the external longitudinal edges (12, 12') of the bed plate elements (1, 1') and the intermediate pier (6) are placed between the adjacent longitudinal edges (11, 11') of the bed plate elements (1, 1'), the width of the supporting sole plates (7) being determined as a function of the distance (e) between the internal longitudinal edges (11, 11') of the bed plate elements (1, 1') such that there remains, between the latter and the edges (71) of the sole plate, a space (9) for adjusting the position of the pier (6),

– the arch elements are placed one after the other, being made to rest by their longitudinal edges (41) on the lateral elements (2, 2'), at the outside, and on the support surfaces (53) of the longitudinal beams (5) at the inside,

– concrete is cast to fill the intervals between the bed plate elements (1, 1'), the bases of the lateral elements (2, 2') and the sole plates (7) of the pier (6) to make them unitary.

FIG.2

FIG.1

EP 0 202 256 B2

FIG.3